# EUROPÄISCHE PATENTANMELDUNG

(11) **EP 4 535 179 A2**
(43) Veröffentlichungstag der Anmeldung: **09.04.2025**
(21) Anmeldenummer: 25152919.4
(22) Anmeldetag: 30.09.2020
(51) Int. Cl.: G06F 15/167

(54) **MESSSYSTEM SOWIE VERFAHREN ZUM STARTEN UND VERFAHREN ZUM BETREIBEN DIESES MESSSYSTEMS**

(30) Priorität: 23.12.2019 DE 102019220559
(62) Teilanmeldung aus: 20199350.8
(71) Anmelder: OptiMEAS Measurement and Automation Systems GmbH, 61381 Friedrichsdorf (DE)
(72) Erfinder: Schranz, Burkhard, 61273 Wehrheim (DE); Langfeld, Patrick, 76149 Karlsruhe (DE); Kessel, Jens-Achim, 64807 Dieburg (DE)
(74) Vertreter: Patentanwälte Bauer Vorberg Kayser

(57) **Zusammenfassung**

Messsystem umfassend einen Speicherbereich (13), in dem mehrere Speicherkanäle (12) ausgebildet sind, wobei die Speicherkanäle (12) mehrere Elemente zur Speicherung unterschiedlicher Versionen eines Datums aufweisen, mehrere Datenproduzenten (10), die jeweils zum Erzeugen von produzierten Daten ausgebildet sind, wobei jeder der mehreren Datenproduzenten (10) dazu ausgebildet ist, produzierte Daten in mindestens einen der mehreren Speicherkanäle (12) abzulegen, und wobei mindestens einer der mehreren Datenproduzenten (10) durch einen Sensor gebildet ist oder einen Sensor umfasst, mehrere Datenkonsumenten (11), die zum Auslesen von produzierten Daten aus mindestens einem der mehreren Speicherkanäle (12) ausgebildet sind, und eine Steuereinheit (16), die zum Steuern und/oder Überwachen des Speicherbereichs (13), der mehreren Datenproduzenten (10) und/oder der mehreren Datenkonsumenten (11) ausgebildet ist, wobei eine Kommunikation zwischen den Datenproduzenten (10) und den Datenkonsumenten (11) über eine gemeinsame Schnittstelle erfolgt, wobei Schnittstelle durch die Speicherkanäle (12) gebildet ist, wobei Schreibvorgänge durch die mehreren Datenproduzenten (10) in die mehreren Speicherkanäle (12) und Lesezugriffe durch die mehreren Datenkonsumenten (11) auf die mehreren Speicherkanäle (12) nicht miteinander synchronisiert sind, und wobei gleichzeitige Schreibzugriffe unterschiedlicher Datenproduzenten (10) und ein gleichzeitiger Schreibzugriff eines Datenproduzenten (10) und Lesezugriff eines Datenkonsumenten (11) auf dasselbe Element eines Speicherkanals (12) verhindert werden.

## Beschreibung

Die Erfindung betrifft ein Messsystem und ein Verfahren zum Betreiben dieses Messsystems.

Die hier in Rede stehenden Messsysteme gewinnen Messwerte, verarbeiten diese gegebenenfalls und stellen die Messwerte (und/oder die Ergebnisse der Verarbeitung) in geeigneter Weise zur Verfügung. Zum Gewinnen der Messwerte weisen diese Messsysteme einen Sensor oder mehrere Sensoren auf oder erhalten Messwerte von zugeordneten oder zuordenbaren Sensoren oder Sensorsystemen. Beispiele derartiger Messsysteme sind Datenlogger, Teleservice-Systeme, Verbrauchserfassungssysteme, Laufkilometerzähler, Automatisierungssysteme oder Zustandsüberwachungssysteme, um lediglich einige zu nennen. Nicht selten sind derartige Messsysteme über ein Weitbereichsnetzwerk erreichbar, um beispielsweise aus der Ferne Messwerte abzufragen oder Konfigurationsänderungen vorzunehmen. Derartig ausgestaltete Messsysteme lassen sich dann dem sogenannten "Internet of Things" (oder kurz "IoT") zurechnen.

Je nach Anwendungsfall gewinnen diese Messsystem verschiedenste Messwerte und stellen diese auf unterschiedliche Weise zur Verfügung. Ein Datenlogger in einem Fahrzeug kann beispielsweise die Geschwindigkeit des Fahrzeugs, die Drehzahl des Motors, die Außentemperatur, den durchschnittlichen Treibstoffverbrauch des Motors und Diagnosedaten von Steuergeräten des Fahrzeugs erfassen und in einem nicht-flüchtigen Speicher ablegen. Auf diese Weise kann eine sogenannte Black-Box entstehen. Ein Zustandsüberwachungssystem kann Messdaten, wie Temperatur, Vibrationsbeanspruchung, Drehzahl oder Beschleunigungen an einer Windkraftanlage erfassen. Diese Messdaten können hinsichtlich des Einhaltens vorgegebener Rahmenbedingungen überwacht werden und bei Verlassen der vorgegebenen Rahmenbedingungen kann ein Alarm oder eine sonstige Meldung ausgelöst werden. Ein Teleservice-System kann beispielsweise für eine Fehlerdiagnose einen Fernzugriff auf Steuergeräte einer Arbeitsmaschine ermöglichen. Hier können Messdaten durch die einzelnen Steuergeräte der Arbeitsmaschine oder durch Sensoren, die mit diesen Steuergeräten verbunden sind, gewonnen werden und an eine entfernte Auswerteeinheit für Diagnosezwecke übertragen werden. Beispielhaft sei hierzu auf ein System verwiesen, das in der DE 10 2015 213 859 A1 offenbart ist. Dies kurze und bei Weitem nicht abschließende Auflistung zeigt, wie universell die hier in Rede stehenden Messsysteme sein und eingesetzt werden können.

In der Praxis ist es üblich, Messsysteme auf das jeweilige Einsatzszenarium hin zu entwickeln. Meist geschieht dies dadurch, dass vordefinierte Baugruppen entwickelt und zusammengeschaltet werden. Diese kommunizieren über vordefinierte Schnittstellen, wie beispielsweise einen CAN (Controller Area Network)-Bus, einen Modbus, einen MVB (Multi Vehicle Bus) oder eine RS485-Schnittstelle, um lediglich einige gängige Schnittstellen zu nennen. Diese Messsysteme können das jeweilige Einsatzszenarium optimal abdecken und hoch integriert werden. Allerdings sind diese Messsysteme meist sehr statisch. Durch die Optimierung auf das jeweilige Einsatzszenarium lassen sich diese Messsysteme oft nur mit sehr großem Aufwand und zu hohen Kosten weiterentwickeln.

Daher sind modulare Messsysteme bekannt, die auf einer relativ universellen Basis aufbauen. Funktionen, wie etwa das Erfassen von Messwerten, das Ermitteln einer GPS (Global Positioning System)-Position, das Bestimmen einer Referenzzeit, das Erfassen eines Verbrauchswertes oder das Auswerten gewonnener Messdaten, werden in einzelne Module ausgelagert, die häufig in einer Art Baukastensystem für verschiedene Einsatzszenarien wiederverwertet werden können. Die Module tauschen Daten über vordefinierte Schnittstellen untereinander aus und interagieren miteinander. Beim Betrieb derartiger modularer Messsysteme überwacht eine Verwaltungseinheit die einzelnen Module und deren Zusammenwirken im Gesamtsystem. Meist sind derartige Systeme durch eine Kombination aus Hardware und Software implementiert.

Derartige modulare Systeme bieten den Vorteil, dass flexibel Funktionalitäten hinzugefügt werden können und dadurch einfach anpassbare Systeme entstehen. Allerdings werden die Systeme bei komplexen Anforderungen schnell sehr aufwändig und damit teuer. Zwischen den einzelnen Modulen entstehen Abhängigkeiten, die bei größer werdenden Systemen nur schwer zu beherrschen sind. Auch die Wartbarkeit solcher Systeme leidet, da - insbesondere bei software-basierten Modulen - mit jeder Aktualisierung eines Moduls Randeffekte auf andere Module entstehen können, die im Entwicklungsprozess geprüft und vermieden werden müssen. Da modulare Messsysteme eine Vielzahl verschiedener Module, teilweise sogar mit unterschiedlichen Versionsständen, aufweisen können, ist die Prüfung möglicher Abhängigkeiten und Randeffekte schwierig oder überhaupt nicht zu bewerkstelligen. Dies kann die Stabilität des Messsystems gefährden und ein Betriebsverhalten des Messsystems weit entfernt von einem Optimum zur Folge haben.

Wenn diese Messsysteme zudem noch Echtzeitanforderungen erfüllen müssen, verschärfen sich die Rahmenbedingungen noch weiter. Denn bei harten Echtzeitanforderungen muss das Messsystem jederzeit ein vordefiniertes Zeitverhalten aufweisen. Bei weichen Echtzeitanforderungen kann dieses Zeitverhalten zwar gelegentlich von der Vorgabe abweichen, allerdings bleibt weiterhin die Notwendigkeit bestehen, das Zeitverhalten des Messsystems relativ genau vorhersagen zu können. Je komplexer ein Messsystem ist, desto schwieriger wird diese Aufgabe. Wenn das Messsystem modular aufgebaut ist, müssen die Abhängigkeiten der einzelnen Module (auch hinsichtlich deren jeweiliger Zeitverhalten) berücksichtigt werden. In der Praxis wird diesem Problem häufig dadurch begegnet, dass die verfügbaren Ressourcen derart großzügig dimensioniert werden, dass stets ein ausreichend gutes Zeitverhalten zu erwarten ist. Dies führt aber zu steigenden Kosten und kann trotzdem zu nicht vorhersehbaren Zuständen führen.

Der vorliegenden Erfindung liegt die Aufgabe zugrunde, ein Messsystem der eingangs genannten Art und ein Verfahren zum Betreiben dieses Messsystems derart auszugestalten und weiterzubilden, dass ein möglichst zuverlässiges, gut skalierbares und dennoch günstiges Messsystem entsteht, das prinzipiell auch für Echtzeitsysteme geeignet ist.

Erfindungsgemäß wird die voranstehende Aufgabe durch die Merkmale des Anspruchs 1 gelöst. Danach umfasst das in Rede stehende Messsystem:
einen Speicherbereich, in dem mehrere Speicherkanäle ausgebildet sind, wobei die Speicherkanäle mehrere Elemente zur Speicherung unterschiedlicher Versionen eines Datums aufweisen,
mehrere Datenproduzenten, die jeweils zum Erzeugen von produzierten Daten ausgebildet sind, wobei jeder der mehreren Datenproduzenten dazu ausgebildet ist, produzierte Daten in mindestens einen der mehreren Speicherkanäle abzulegen, und wobei mindestens einer der mehreren Datenproduzenten durch einen Sensor gebildet ist oder einen Sensor umfasst,
mehrere Datenkonsumenten, die zum Auslesen von produzierten Daten aus mindestens einem der mehreren Speicherkanäle ausgebildet sind, und
eine Steuereinheit, die zum Steuern und/oder Überwachen des Speicherbereichs, der mehreren Datenproduzenten und/oder der mehreren Datenkonsumenten ausgebildet ist,
wobei eine Kommunikation zwischen den Datenproduzenten und den Datenkonsumenten über eine gemeinsame Schnittstelle erfolgt, wobei Schnittstelle durch die Speicherkanäle gebildet ist,
wobei Schreibvorgänge durch die mehreren Datenproduzenten in die mehreren Speicherkanäle und Lesezugriffe durch die mehreren Datenkonsumenten auf die mehreren Speicherkanäle nicht miteinander synchronisiert sind, und wobei gleichzeitige Schreibzugriffe unterschiedlicher Datenproduzenten und ein gleichzeitiger Schreibzugriff eines Datenproduzenten und Lesezugriff eines Datenkonsumenten auf dasselbe Element eines Speicherkanals verhindert werden.

Ein Verfahren zum Starten des die Schritte:
Einlesen einer Konfiguration,
Initialisieren mehrerer Datenproduzenten entsprechend der Konfiguration,
Initialisieren mehrerer Datenkonsumenten entsprechend der Konfiguration,
Einrichten mehrerer Datenkanäle in einem Speicherbereich derart, dass die durch die mehreren Datenproduzenten und durch die mehreren Datenkonsumenten benötigten Datenkanäle verfügbar sind,
Starten der mehreren Datenkonsumenten und
Starten der mehreren Datenkonsumenten.

Hinsichtlich des Verfahrens zum Betreiben des Messsystems ist die voranstehende Aufgabe durch die Merkmale des Anspruchs 14 gelöst. Danach umfasst dieses Verfahren die Schritte:
Produzieren von produzierten Daten durch einen von mehreren Datenproduzenten,
Ablegen der produzierten Daten in mindestens einem Speicherkanal,
Auslesen von produzierten Daten aus einem Speicherkanal durch einen von mehreren Datenkonsumenten,
wobei eine Kommunikation zwischen den Datenproduzenten und den Datenkonsumenten über eine gemeinsame Schnittstelle erfolgt, wobei die Schnittstelle durch die Speicherkanäle (12) ausgebildet ist,
wobei Schreibvorgänge durch die mehreren Datenproduzenten in die mehreren Speicherkanäle und Lesezugriffe durch die mehreren Datenkonsumenten auf die mehreren Speicherkanäle nicht miteinander synchronisiert sind und wobei gleichzeitige Schreibzugriffe unterschiedlicher Datenproduzenten (10) und ein gleichzeitiger Schreibzugriff eines Datenproduzenten (10) und Lesezugriff eines Datenkonsumenten (11) auf dasselbe Element eines Speicherkanals (12) verhindert werden.

In erfindungsgemäßer Weise ist zunächst erkannt worden, dass ein modulares Messsystem auch ohne komplexer werdende wechselseitige Abhängigkeiten der Module und ohne erhöhte Anforderungen an das Gesamtsystem aufgebaut werden kann. Erfindungsgemäß ist nämlich erkannt worden, dass jedes Modul eines Messsystems letztendlich vereinfacht als Datenproduzent oder als Datenkonsument aufgefasst werden kann. Ein Datenproduzent erzeugt Daten und stellt diese als produzierte Daten für andere Module zur Verfügung. Ein Datenkonsument nutzt produzierte Daten für den ihm jeweils zugedachten Zweck, beispielsweise ein Abspeichern in einem nicht-flüchtigen Speicher oder einem Versenden der Daten als CAN-Bus-Nachricht. Ein Sonderfall eines Datenproduzenten (oder eines Datenkonsumenten) ist eine Verarbeitungseinheit, die produzierte Daten konsumiert, diese verarbeitet und anschließend wieder anderen Datenkonsumenten zur weiteren Verwendung zur Verfügung stellt. Für die verallgemeinerte Betrachtung ist eine Verarbeitungseinheit aber lediglich ein Datenkonsument und ein Datenproduzent in einer gemeinsamen Einheit.

Erfindungsgemäß ist ferner erkannt worden, dass ein Messsystem dann besonders universell und besonders gut skalierbar wird, wenn die Kommunikation zwischen Datenproduzenten und Datenkonsumenten über eine gemeinsame, möglichst einfach gestaltete Schnittstelle erfolgt. Erfindungsgemäß ist diese Schnittstelle durch mehrere Speicherkanäle gebildet, die in einem Speicherbereich ausgebildet sind. In dem erfindungsgemäßen Messsystem legt ein Datenproduzent produzierte Daten in einem oder mehreren Datenkanälen ab und ein Datenkonsument lädt die produzierten Daten aus dem jeweiligen Datenkanal bzw. den jeweiligen Datenkanälen. Auf diese Weise entsteht ein universelles Konzept, das für verschiedenst ausgerichtete Messsysteme genutzt werden kann. Vorzugsweise geht die Nutzung der Speicherkanäle so weit, dass sämtliche Kommunikation zwischen Datenkonsumenten und Datenproduzenten über Speicherkanäle erfolgt und keine weiteren Schnittstellen zwischen den Datenproduzenten/Datenkonsumenten vorhanden sind.

Ein erfindungsgemäßes Messsystem, das die voranstehenden Eigenschaften aufweist, umfasst einen Speicherbereich, in dem mehrere Speicherkanäle ausgebildet sind, mehrere Datenproduzenten, mehrere Datenkonsumenten und eine Steuereinheit. Die mehreren Datenproduzenten sind jeweils zum Erzeugen von produzierten Daten ausgebildet, wobei mindestens einer der mehreren Datenproduzenten durch einen Sensor gebildet ist oder einen Sensor umfasst. Jeder der mehreren Datenproduzenten legt die durch ihn produzierten Daten in einem der mehreren Speicherkanäle ab und stellt sie damit für ein Auslesen durch einen der mehreren Datenkonsumenten zur Verfügung. Jeder der mehreren Datenkonsumenten kann auf mindestens einen der mehreren Speicherkanäle zugreifen und dort enthaltene produzierte Daten auslesen. Die Steuereinheit ist zum Steuern und/oder Überwachen des Speicherbereichs, der mehreren Datenproduzenten und/oder der mehreren Datenkonsumenten ausgebildet. Dabei sind die einzelnen Komponenten des Messsystems derart ausgebildet, dass Schreibvorgänge durch die mehreren Datenproduzenten in die mehreren Speicherkanäle und Lesezugriffe durch die mehreren Datenkonsumenten auf die mehreren Speicherkanäle nicht miteinander synchronisiert sind. Auf diese Weise entsteht ein Messsystem, das flexibel erweiterbar ist, klare Schnittstellen zwischen den Komponenten aufweist und gleichzeitig ein definiertes vorhersagbares Zeitverhalten aufweisen wird.

Als ein "Speicherkanal" wird ein Teil eines Speicherbereichs aufgefasst, in dem ein oder mehrere Elemente eines produzierten Datums abgespeichert werden können. Die Speicherkanäle weisen mehrere Elemente auf, wobei diese Elemente unterschiedliche Versionen des gleichen Datums speichern, beispielsweise einen Messwert, der zu unterschiedlichen Zeitpunkten aufgenommen worden ist. Es bietet sich an, wenn der Speicherbereich, in dem die mehreren Speicherkanäle ausgebildet sind, durch einen beliebig adressierbaren Speicherbereich gebildet ist. Es ist prinzipiell unerheblich, ob der Speicherbereich in einem flüchtigen oder einem nicht-flüchtigen Speicher gebildet ist oder ob der Speicherbereich in einem einzelnen Speicher ausgebildet ist oder sich über mehrere Speicher erstreckt. Prinzipiell ist sogar denkbar, dass sich der Speicherbereich über verschiedene Speichertechnologien erstreckt. In einer besonders bevorzugten Ausgestaltung ist der Speicherbereich jedoch durch einen RAM (Random Access Memory) gebildet. Vorzugsweise ist ein Speicherkanal durch ein FIFO (First In First Out)-Speicher gebildet, dessen Elemente zyklisch beschrieben werden und der Lesezugriffe auf jedes der einzelnen Elemente ermöglicht.

Die Tatsache, dass Schreibvorgänge und Lesezugriffe "nicht miteinander synchronisiert" sind, bedeutet ganz allgemein, dass praktisch keine zeitlichen Abhängigkeiten zwischen den Zugriffen auf die mehreren Speicherkanäle eingeführt sind. In einer Ausgestaltung bedeutet dies, dass ein Datenproduzent jederzeit produzierte Daten in einen Speicherkanal ablegen und ein Datenkonsument jederzeit produzierte Daten aus den Speicherkanal auslesen kann. Es bietet sich lediglich an, wenn ein Schreibvorgang und ein Lesezugriff auf dasselbe Element eines Speicherkanals verhindert wird, da sonst undefinierte Ergebnisse ausgelesen werden könnten. Auch bietet es sich an, wenn zwei Datenproduzenten nicht gleichzeitig in dasselbe Element eines Speicherkanals schreiben möchten. Beides lässt sich aber meist durch die geschickte Organisation der (möglichen) Zugriffe auf die Speicherkanäle verwirklichen, insbesondere angesichts der Natur der in Rede stehenden Messsysteme, bei denen sich ein Datenproduzieren und ein Datenkonsumieren meist gut zeitlich entkoppeln lässt.

Was "produzierte Daten" sein können, hängt von den jeweiligen Datenproduzenten ab. Wenn der Datenproduzent einen Sensor umfasst oder durch einen Sensor gebildet ist, dürften die produzierten Daten durch Sensordaten bzw. Messdaten gebildet sein. Je nach Art des Sensors können die Messdaten eine Spannung, einen Strom, eine Temperatur, einen Vibrationsvektor, einen Abstandswert, dreidimensionale Profildaten, einen Druckwert, einen Pegelwert, einen Ölgehalt, eine Feuchtigkeit, einen Lautstärkepegel oder einen Helligkeitswert umfassen, um beispielhaft und nicht auf diese beschränkend einige mögliche Ausgestaltungen zu nennen. Bei einem Bus-Endgerät als Datenproduzenten könnten produzierte Daten durch empfangene Bus-Nachrichten oder durch Inhalte empfangener Bus-Nachrichten gebildet sein. Wenn der Datenproduzent durch eine Geopositionseinheit (beispielsweise GPS (Global Positioning System) oder Galileo basiert) gebildet ist, können produzierte Daten durch Positionskoordinaten gebildet sein. Bei einem als Verbrauchsmessgerät ausgebildeten Datenproduzenten können produzierte Daten erfasste Verbrauchswerte sein. Produzierte Daten können auch ein Kamerabild umfassen, wenn der Datenproduzent eine Kamera ist. Produzierte Daten können auch bereits ausgewerteten Messdaten sein, beispielsweise die durch eine Fourier-Transformation zerlegten spektralen Anteile eines Signals. Diese beispielhafte und nicht abschließende Aufzählung zeigt, wie universell produzierte Daten und die Datenproduzenten sein können.

Gleichzeitig zeigt diese beispielhafte Aufzählung, dass ein produziertes Datum unterschiedlich groß sein und unterschiedliche Dimensionen aufweisen kann. Ein produziertes Datum kann ein Bit groß sein (beispielsweise für einen Logikwert) oder kann mehrdimensional sein (beispielsweise für ein Fourier-Spektrum oder Profildaten). Vorzugsweise ist der jeweils für die Speicherung produzierter Daten genutzte Speicherkanal auf die jeweiligen produzierten Daten angepasst. Wenn die produzierten Daten Logikwerte sind, so können die Elemente des Speicherkanals jeweils 1 Bit groß sein. Wenn die produzierten Daten mehrdimensionale Größen sind, sollten die Elemente des Speicherkanals jeweils zum Speichern dieser produzierten Daten in einem einzelnen Element ausgestaltet sein.

Ein Datenproduzent kann lediglich Zugriff auf einen einzelnen Speicherkanal haben. Dies ist dann denkbar, wenn der Datenproduzent lediglich eine Art von produzierten Daten erzeugt und ausgibt. Wenn ein Datenproduzent mehrere Arten von produzierten Daten erzeugt und ausgibt, bietet es sich üblicherweise an, wenn der Datenproduzent Zugriff auf mehrere Speicherkanäle erhält, nämlich entsprechend der Anzahl der Arten von produzierten Daten. Beispielsweise könnte ein Datenproduzent eine Temperatur, einen Pegelstand und einen Ölgehalt eines Schmiermittels als drei verschiedene Arten von produzierten Daten liefern und diese in drei verschiedene Speicherkanäle ablegen. Wenn die produzierten Daten allerdings immer gemeinsam ausgewertet werden, kann es sich anbieten, wenn die produzierten Daten in einem Tupel gespeichert werden, in dem vorgenannten Beispiel in einem Vektor mit drei Elementen (Temperatur, Pegelstand, Ölgehalt). Wenn produzierte Daten von besonders vielen Datenkonsumenten ausgelesen werden sollen, ist es auch denkbar, dass ein Datenproduzent produzierte Daten als Kopien in mehrere Speicherbereiche parallel ablegt und dadurch eventuelle Zugriffskollisionen durch Datenkonsumenten reduziert. In diesem Fall hätte der Datenproduzent ebenfalls Zugriff auf mehrere Speicherkanäle.

Generell kann das Messsystem auf verschiedenste Arten implementiert sein. Prinzipiell denkbar ist eine reine Hardware-Implementierung des Messsystems. Vorzugsweise ist das Messsystem jedoch durch eine Kombination aus Software und Hardware implementiert. Dabei ist mindestens ein Mikroprozessor vorgesehen, der ein in einem Speicher abgelegtes Programm abarbeitet und hierfür einen Arbeitsspeicher nutzt. Es kann auch ein Betriebssystem, beispielsweise Linux, als allgemeine Basis für die Abarbeitung auf dem Mikroprozessor abgearbeitet werden. Entsprechende Hardware-Software-Systeme, die sich prinzipiell zur Implementierung des erfindungsgemäßen Messsystems nutzen lassen, sind aus der Praxis bekannt.

In einer Ausgestaltung des erfindungsgemäßen Messsystems sind die Datenproduzenten, die Datenkonsumenten, der Speicherbereich und die Steuereinheit in einer gemeinsamen Box implementiert. Derartige Boxen können beispielsweise durch die einleitend bereits genannten Datenlogger, Teleservice-Systeme, Verbrauchserfassungssysteme, Laufkilometerzähler, Automatisierungssysteme oder Zustandsüberwachungssysteme gebildet sein.

Die Steuereinheit des Messsystems kann auf verschiedenste Arten realisiert sein. Wesentlich ist, dass die Steuereinheit die ihr zugedachten Steuer-/Überwachungsaufgaben erfüllen kann und einen zuverlässigen Betrieb des Messsystems gewährleistet. Wie diese Aufgabe letztendlich durchgeführt wird, ist zweitranging. In einer bevorzugten Ausgestaltung umfasst die Steuereinheit einen Zustandsautomaten (auch als State Machine bekannt). Zustandsautomaten sind durch eine Menge von Zuständen definiert, die innerhalb des Zustandsautomaten angenommen werden können. Aktionen beschreiben Übergänge zwischen den einzelnen Zuständen. Bei dem erfindungsgemäßen Messsystem kann ein Zustandsautomat dazu genutzt werden, die mehreren Datenproduzenten und/oder die mehreren Datenkonsumenten und/oder die mehreren Speicherkanäle zu initialisieren. Ein "Initialisieren" bedeutet in diesem Kontext, dass der Zustandsautomat das Messsystem - eventuell über einen oder mehreren Zwischenzustand - in einen lauffähigen Zustand versetzt und die benötigten Datenproduzenden, Datenkonsumenten und/oder Speicherkanäle vorbereitet und/oder startet. Dabei basiert das "Initialisieren" vorzugsweise auf einer Konfiguration, die beispielsweise beschreibt, welche Datenproduzenden und welche Datenkonsumenten für das Messsystem wie initialisiert werden müssen, welche Datenkanäle für welchen Datenproduzenden und welchen Datenkonsumenten erforderlich sind und welche Zugriffsrechte für die einzelnen Datenproduzenten/Datenkonsumenten eingerichtet werden müssen.

Eine Konfiguration kann auf verschiedenste Weise gebildet sein, so lange daraus eindeutig hervorgeht, wie die Steuereinheit das Messsystem einrichten und/oder überwachen soll. Vorzugsweise ist die Konfiguration durch ein XML (eXtensible Markup Language)-Dokument oder ein JSON (JavaScript Object Notation)-Dokument gebildet. Dabei können verschiedene Aspekte des Messsystems in einer systemweiten Konfiguration definiert sein. Allerdings ist auch denkbar, dass mehrere Konfigurationen vorhanden sind, die für den jeweiligen Zweck separat geladen werden, beispielsweise eine Basiskonfiguration, eine Konfiguration für Datenproduzenten, eine Konfiguration für Datenkonsumenten, eine Konfiguration für Systemmodule und eine Konfiguration für die Speicherkanäle und deren Bedeutung im Messsystem.

Zur weiteren Verbesserung der Sicherheit des Messsystems kann die Steuereinheit Zugriffe auf die mehreren Speicherkanäle einrichten und steuern. Das Einrichten der Zugriffe auf die mehreren Speicherkanäle kann dabei während eines Initialisieren des Messsystems erfolgen. In dieser Ausgestaltung würde die Steuereinheit die Zugriffe der mehreren Datenproduzenten und der mehreren Datenkonsumenten derart einrichten und steuern, dass die mehreren Datenproduzenten und die mehreren Datenkonsumenten lediglich auf die Speicherkanäle zugreifen können, die in der Konfiguration festgelegt sind. Die Speicherkanäle, für die ein Datenproduzent oder ein Datenkonsumenten keine Zugriffserlaubnis hat, wären für diesen Datenproduzenten bzw. Datenkonsumenten nicht sichtbar. Die Steuereinheit kann sogar aktiv Zugriffsversuche eines Datenproduzenten bzw. Datenkonsumenten unterbinden, wenn dieser Zugriff nicht erlaubt ist.

In einer Weiterbildung bleibt ein einmal initialisiertes Messsystem in seiner Struktur bis zu einem Neustart des Messsystems unveränderbar. Dies würde bedeuten, dass zur Laufzeit des Messsystems keine weiteren Datenproduzenten oder Datenkonsumenten oder Speicherkanäle hinzugefügt werden können. Dies kann auch bedeuten, dass einmal durch die Steuereinheit eingerichtete Zugriffe auf Speicherkanäle zur Laufzeit des Messsystems unveränderbar sind. Dies ermöglicht, dass unberechtigte Veränderungen des Messsystems verhindert werden können oder zumindest durch den notwendigen Neustart des Messsystems gut erkennbar sind. Bei einer derartigen Ausgestaltung würden Veränderungen der Struktur des Messsystems durch eine Änderung der Konfiguration vorgenommen und anschließend basierend auf der geänderten Konfiguration das Messsystem neu gestartet.

In einer Ausgestaltung kann der Speicherbereich, in dem die mehreren Speicherkanäle ausgebildet sind, Bestandteil eines Speichersystems sein. Dieses Speichersystem wäre in dieser Ausgestaltung Bestandteil des Messsystems. Das Speichersystem kann eine Speichersteuereinheit umfassen, die zum Initialisieren und Verwalten der mehreren Speicherkanäle und zum Steuern der Zugriffe auf die mehreren Speicherkanäle ausgebildet ist. Die Speichersteuereinheit kann als Teil der übergeordneten Steuereinheit des Messsystems fungieren oder durch die übergeordnete Steuereinheit des Messsystems gesteuert werden.

In einer Weiterbildung kann für jeden der mehreren Speicherkanäle ein Schreibzeiger und mindestens ein Lesezeiger vorhanden sein. Der Schreibzeiger bzw. der mindestens eine Lesezeiger würden dabei auf ein Element des jeweils zugehörigen Speicherkanals zeigen. Dabei würde der Schreibzeiger auf das Element des jeweils zugehörigen Speicherkanals zeigen, dass zuletzt geschrieben worden ist oder das als nächstes geschrieben werden kann. Die Schreibzeiger sind damit ein Indikator für die produzierten Daten, die als letztes erzeugt und in die Speicherkanäle abgelegt worden sind. Die Lesezeiger können dabei verschiedene Aufgaben erfüllen. So kann beispielsweise für jede Kombination aus Datenkonsumenten und Speicherkanal ein Lesezeiger vorhanden sein, der das zuletzt ausgelesene Element des Speicherkanals angibt. Auf diese Weise kann ein Datenkonsument ein Anfragen stellen, die alle bisher noch nicht ausgelesenen produzierten Daten an den Datenkonsumenten ausgibt. Alternativ oder ergänzend kann ein Lesezeiger vorhanden sein, der stets auf das aktuellste auslesbare Element eines Speicherkanals verweist. Prinzipiell kann ein Lesezeiger auf jedes Element eines Speicherkanals zeigen, das produzierte Daten enthält oder zumindest enthalten kann.

In einer Weiterbildung steuert die Steuereinheit Zugriffe auf die mehreren Speicherkanäle derart, dass jeder der mehreren Speicherkanäle produzierte Daten gleichen Ursprungs speichert. "Gleichen Ursprungs" bedeutet, dass die produzierten Daten in einem Speicherkanal identische Bedeutung haben. Wenn beispielsweise in einen Speicherkanal produzierte Daten mit der Bedeutung "Öldruck" abgelegt sind, stellt die Steuereinheit sicher, dass sich alle produzierten Daten auf den Öldruck an derselben Stelle bezieht. Dies dürfte üblicherweise bedeuten, dass die Steuereinheit die Datenproduzenten beim Schreiben der produzierten Daten in einen Speicherkanal überwacht. Wenn ein Speicherkanal beispielsweise produzierte Daten in Form eines Kamerabilds einer bestimmten Kamera speichert, würde die Steuereinheit sicherstellen, dass lediglich diese bestimmte Kamera (oder eine diese Kamerabilder bearbeitende Verarbeitungseinheit) in diesen Speicherkanal schreiben darf.

In einer Ausgestaltung weist jeder der mehreren Speicherkanäle eine vordefinierte Anzahl von Elementen auf. Diese vordefinierte Anzahl von Elementen kann für jeden der Speicherkanäle gleich sein. In der Praxis wird sich die vordefinierte Anzahl von Elementen jedoch für die einzelnen Speicherkanäle unterscheiden. So können Speicherkanäle vorhanden sein, die lediglich ein einzelnes produziertes Datum speichern. Dies kann beispielsweise zum Speichern eines Logikwertes oder zum Speichern eines aktuellsten Werts einer Prozessgröße genutzt werden. Es wäre auch denkbar, dass ein Speicherkanal eine Kopie eines jeweils aktuellsten Werts eines anderen Speicherkanals enthält. Die meisten Speicherkanäle dürften jedoch mehrere Elemente aufweisen. Dabei bietet es sich an, wenn die Anzahl der Elemente an den/die Datenproduzenten, der/die produzierte Daten in den jeweiligen Speicherkanal schreibt/schreiben, angepasst ist. Wenn ein Datenproduzent produzierte Daten mit einer relativ hohen Datenrate schreibt, beispielsweise 50 kHz oder 100 kHz, bietet es sich an, wenn ein Speicherkanal ausreichend Speicherkapazität für diesen Datenproduzenten zur Verfügung stellt. So könnte die Anzahl von Elementen des Speicherkanals so groß gewählt sein, dass der Datenproduzent zumindest für einige Sekunden produzierte Daten ablegen kann, ohne dass der Speicherkanal überläuft.

Innerhalb eines Speicherkanals sind vorzugsweise alle Elemente gleichwertig, d. h. jedes Element eines Speicherkanals ist zum Speichern desselben produzierten Datums geeignet. Dabei können die Elemente innerhalb des Speicherkanals skalar, eindimensional oder mehrdimensional sein. Skalar bedeutet, dass die Elemente jeweils einen einzelnen Wert speichern, beispielsweise einen Logikwert, eine natürliche Zahl oder eine Dezimalzahl. Ein eindimensionales Element bedeutet, dass jedes Element in der Lage ist, eine Reihe von Werten zu speichern. Dies kann beispielsweise ein Vektor sein, aber auch die Koeffizienten einer diskreten Fourier-Transformation, einen Text oder Geopositionsdaten. Ein mehrdimensionales Element bedeutet, dass jedes Element zwei oder mehr Dimensionen aufweist. Ein zweidimensionales Element kann beispielsweise ein Kamerabild speichern.

Prinzipiell können die mehreren Speicherkanäle unterschiedlichst aufgebaut sein. Wichtig ist, dass sie in dem erfindungsgemäßen System ein Speichern in der beschriebenen Weise zulassen. In einer bevorzugten Ausgestaltung ist einer der mehreren Speicherkanäle oder mehrere mehreren Speicherkanäle durch einen Ringspeicher mit jeweils einer vordefinierten Anzahl von Speicherelementen gebildet. Dies bedeutet, dass der Ringspeicher stets in einer vordefinierten Richtung beschrieben wird und bei Erreichen der letzten Speicherstelle des Ringspeichers automatisch auf die erste Speicherstelle gesprungen wird. Auf diese Weise werden Speicherelemente automatisch überschrieben, wenn die vordefinierte Anzahl von gespeicherten Daten überschritten wird. Diese Organisation des Speichers bietet Vorteil, dass die Inhalte eines Speicherkanals nicht aktiv gelöscht werden müssen. Gleichzeitig sollten produzierte Daten innerhalb einer gewissen Zeit ausgelesen werden, da sie sonst durch neu produzierte Daten überschrieben werden. Daher ist die Anzahl der Speicherelemente des Ringspeichers vorzugsweise an die Anforderungen eines auf den Ringspeicher zugreifenden Datenproduzenten angepasst. Wenn ein Datenproduzent innerhalb eines Zeitintervalls sehr viele Daten produziert und in den Speicherkanal ablegt, bietet es sich an, wenn die Anzahl der Speicherelemente entsprechend groß gewählt wird.

In einer Weiterbildung ist mindestens einer der mehreren Datenproduzenten dazu ausgebildet, produzierte Daten zusammen mit einem Zeitstempel abzuspeichern. Dabei gibt der Zeitstempel den Zeitpunkt an, an dem ein abgespeichertes produziertes Datum erzeugt oder abgespeichert worden ist. Hierzu kann der jeweilige Datenproduzent Zugriff auf einen Zeitgeber haben, der eine jeweils aktuelle Zeit ausgeben kann. Wenn der Zeitgeber selbst nicht Bestandteil des Datenproduzenten ist, kann die Kommunikation zwischen dem Datenproduzenten und dem Zeitgeber über einen Speicherkanal erfolgen. Zum Abspeichern des Zeitstempels kann jedes Element des Speicherkanals um eine entsprechende Speicherstelle erweitert werden. Dabei bietet es sich an, wenn ein Zeitstempel durch eine Anzahl von Zeitintervallen definiert ist, um die sich der durch den Zeitstempel angegebenen Zeitpunkt von einem Referenzzeitpunkt unterscheidet. Beispielsweise können die Zeitintervalle Nanosekunden sein, der Referenzzeitpunkt der 1. Januar 1970.

In einer anderen Weiterbildung kann mindestens einer der mehreren Datenproduzenten dazu ausgebildet sein, produzierte Daten mit einem vordefinierten zeitlichen Abstand in einen der mehreren Speicherkanäle abzulegen. Daraus ergibt sich, dass zwei benachbarte Elemente eines Speicherkanals stets mit dem vordefinierten zeitlichen Abstand erzeugt bzw. abgespeichert worden sind. Der zeitliche Abstand kann dabei beispielsweise von der Datenrate definiert werden, mit der der Datenproduzent Messdaten erzeugt. Der Speicherkanal speichert damit eine Zeitserie mit gleichen zeitlichen Abständen.

Für viele Anwendungen kann es ausreichen, wenn die zeitlichen Abstände zwischen den einzelnen produzierten Daten bekannt sind. Gelegentlich kann es jedoch wichtig sein, den absoluten Zeitpunkt der Erzeugung produzierter Daten zu kennen. Hierfür kann in einer Weiterbildung der Zeitserie mit gleichen Abständen ein Re-Synchronisationszeitstempel vorhanden sein. Dies bedeutet, dass bei mindestens einem Element des Speicherkanals ein Zeitstempel abspeicherbar ist, auf den sich die nachfolgenden Elemente des Speicherkanals zeitlich zurückbeziehen. Zur Vermeidung unterschiedlich großer Elemente des Speicherkanals könnte jedes einzelne Element des Speicherkanals dazu geeignet sein, einen Re-Synchronisationszeitstempel zu speichern.

Prinzipiell kann jede Zeitserie mit gleichen zeitlichen Abständen Lücken umfassen, d.h. nicht jedes Element eines Speicherkanals ist gefüllt. Dies kann dadurch erreicht werden, dass ein Schreibzeiger, der auf das als nächstes zu schreibende Element des Speicherkanals zeigt, mit einem vorgegebenen zeitlichen Abstand zu dem nächsten Element geschaltet wird. Wenn ein Datenproduzent bis zu dem nächsten Umschalten des Schreibzeigers keine produzierten Daten in den Speicherkanal ablegt, entsteht eine Lücke, wobei dennoch der zeitliche Abstand zwischen zwei die Lücke begrenzenden produzierten Daten eindeutig über die Anzahl nicht beschriebener Elemente bestimmbar ist. Insbesondere bei der Verwendung von Ringspeichern dürfte es sich anbieten, wenn bei Nicht-Schreiben neuer Daten der Inhalt des Speicherelements aus dem vorangegangenen Schreibzyklus gelöscht wird.

In einer Weiterbildung weist das erfindungsgemäße Messsystem neben reinen Datenproduzenten und reinen Datenkonsumenten mindestens eine Verarbeitungseinheit auf. Eine Verarbeitungseinheit ist dazu ausgebildet, produzierte Daten aus mindestens einem der Speicherkanäle auszulesen, ausgelesenen Daten einem Verarbeitungsprozess zu unterziehen und derart gewonnene verarbeitete Daten in mindestens einen der mehreren Speicherkanäle abzulegen. Dabei ist es denkbar, dass eine Verarbeitungseinheit die verarbeiteten Daten in denselben Speicherkanal bzw. dieselben Speicherkanäle zurückschreibt, aus dem/denen produzierte Daten vor dem Verarbeitungsprozess geladen worden sind. Dies kann sich beispielsweise anbieten, wenn die Verarbeitungseinheit eine Messfehlerkorrektur auf produzierten Daten durchführt. Vorzugsweise werden die verarbeiteten Daten jedoch in einen anderen Speicherkanal abgelegt.

Die mehreren Datenproduzenten können durch verschiedentliche Module und Baugruppen gebildet sein. Wesentlich ist, dass die mehreren Datenproduzenten produzierte Daten erzeugen und in einen oder mehrere Speicherkanäle ablegen können. Diese Anforderungen sind jedoch von einer Vielzahl möglicher Datenproduzenten erfüllbar. In bevorzugten Ausgestaltungen umfassen die mehreren Datenproduzenten einen Sensor, einen Geber, einen Geopositionstracker, eine CAN (Controller Area Network)-Bus-Sendeeinheit, eine Kameraeinheit, eine MVB (Multi Vehicle Bus)-Sendeeinheit, ein Diagnosesystem und/oder eine Modbus-Einheit.

Auch die mehreren Datenkonsumenten können durch verschiedentliche Module und Baugruppen gebildet sein. Wesentlich ist, dass die mehreren Datenkonsumenten produzierte Daten aus einem oder mehreren Speicherkanäle auslesen und diese für jeweiligen Zweck des Datenkonsumenten zur Verfügung stellen können. Auch diese Anforderungen sind von einer Vielzahl möglicher Daten Konsumenten erfüllbar. In einer bevorzugten Ausgestaltung umfassen die mehreren Datenkonsumenten einen Aktuator (beispielsweise eine Relay, einen Magnetschalter oder ein Ventil), eine Mensch-Maschine-Schnittstelle (beispielsweise in Form eines Bildschirms), eine Maschine-Maschine-Schnittstelle, eine Modbus-Sendeeinheit, eine CAN-Bus-Sendeeinheit, ein MQTT (Message Queuing Telemetry Transport)-Server, ein Alarm-Management-System und/oder einen Datenlogger.

Zum Ermöglichen eines externen Zugriffs auf das Messsystem kann das Messsystem mindestens eine Schnittstelle aufweisen, die einen steuernden Zugriff auf das Messsystem ermöglicht. Dabei kann die Schnittstelle einen Zugriff für ein lokal bei dem Messsystem vorhandenes Endgerät ermöglichen. Vorzugsweise ist die Schnittstelle jedoch dazu ausgebildet, eine Kommunikation zwischen einem entfernten Endgerät und der Steuereinheit zu ermöglichen. Hierzu kann die Schnittstelle durch ein Weitbereichsnetzwerk ausgebildet sein. Lediglich beispielhaft für derartige Weitbereichsnetzwerke sei auf DSL (Digital Subscriber Line), LTE (Long Term Evolution), UMTS (Universal Mobile Telecommunications Systems) oder GSM (Global System for Mobile Communications) verwiesen. Dabei bietet es sich an, wenn die Kommunikation zwischen Steuereinheit und Endgerät verschlüsselt ist. Derartige verschlüsselte Verbindungen sind aus der Praxis hinlänglich bekannt.

Der steuernde Zugriff auf das Messsystem kann auf verschiedenste Arten bewerkstelligt werden. So kann ein externes Endgerät gezielt in die Steuereinheit des Messsystems eingreifen und gewünschte Vorgänge innerhalb des Messsystems auslösen. Dadurch kann das Messsystem sehr flexibel beeinflusst werden. Da ein derartiger steuernder Zugriff allerdings recht tief in das Messsystem eingreift, sollte aus sicherheitstechnischen Überlegungen ein unerlaubter Fremdzugriff wirkungsvoll verhinderbar sein. Eine andere Möglichkeit eines steuernden Zugriffs durch ein externes Endgerät besteht darin, eine Konfiguration des Messsystems verändern und bei dem Messsystem speichern zu können. Das Messsystem kann dazu ausgebildet sein, bei Erkennen einer geänderten Konfiguration das gesamte Messsystem neu zu starten.

Auf diese Weise kann durch Verändern der Konfiguration steuernd Einfluss auf das Messsystem genommen werden.

Vorzugsweise ist das Messsystem modular aufgebaut. Die Datenproduzenten und die Datenkonsumenten wären dann jeweils als Module ausgebildet. Dabei kann das Messsystem noch weitere Module aufweisen, die beispielsweise Dienste für das gesamte Messsystem übernehmen, wie das Synchronisieren eines Zeitgebers oder das Empfangen von Geopositionsdaten. Dabei können die Module unterschiedliche Lebensdauern haben. So kann eine erste Klasse von Modulen zur Laufzeit des Messsystems wieder entladen werden. Eine zweite Klasse von Modulen, die beispielsweise essentielle Funktionen des Messsystems übernehmen, können nur mit dem Herunterfahren des Messsystems beendet werden.

Das erfindungsgemäße Messsystem kann durch ein erfindungsgemäßes Verfahren zum Starten des Messsystems gestartet werden. In einem ersten Schritt wird hierbei eine Konfiguration eingelesen. Diese Konfiguration kann aus einem Speicher des Messsystems ausgelesen werden. Es ist jedoch auch denkbar, dass die Konfiguration über eine Schnittstelle übertragen wird. Für die Übertragung kann beispielsweise SCPI (Standard Commands for Programmable Instruments), ein JSON (JavaScript Object Notation) Call oder gPRC (ein System für Fernaufrufe in verteilten Systemen) erfolgen.

Entsprechend der Konfiguration werden dann nacheinander die mehreren Datenproduzenten und die mehreren Datenkonsumenten initialisiert. Abhängig von den Speicherkanälen, die durch die mehreren Datenproduzenten und die mehreren Datenkonsumenten benötigt werden, werden danach mehrere Speicherkanäle in einem Speicherbereich eingerichtet. Auf diese Weise ist sichergestellt, dass eine Kommunikation zwischen den einzelnen Datenproduzenten und Datenkonsumenten möglich ist. Nach Abschluss der Einrichtung der mehreren Speicherkanäle werden die mehreren Datenkonsumenten und danach die mehreren Datenproduzenten gestartet. Sofern bei keinem der einzelnen Schritte ein Fehler aufgetreten ist, befindet sich das Messsystem danach in einem lauffähigen Zustand.

Das erfindungsgemäße Messsystem kann durch ein erfindungsgemäßes Verfahren zum Betreiben des Messsystems betrieben werden. Hierzu werden zunächst durch mindestens einen von mehreren Datenproduzenten produzierte Daten erzeugt und in mindestens einem von mehreren Speicherkanälen abgelegt. Mindestens einer von mehreren Datenkonsumenten liest danach die abgelegten produzierten Daten aus dem Speicherkanal/den Speicherkanälen aus. Dabei werden Schreibvorgänge durch die mehreren Datenproduzenten in die mehreren Speicherkanäle und Lesezugriffe durch die mehreren Datenkonsumenten auf die mehreren Speicherkanäle nicht miteinander synchronisiert.

Auf diese Weise kann ein Messsystem mit einem flexiblen Zeitverhalten und kontrollierbaren Abhängigkeiten zwischen den Komponenten des Systems entstehen. Es muss lediglich gewährleistet sein, dass während eines Lesezugriffs auf ein Element eines Speicherkanals kein Schreibzugriff auf dasselbe Element erfolgt, um das Entstehen korrupter Daten zu vermeiden. Da Schreib- und Lesezugriffe auf ein Element eines Speicherkanals jedoch sehr rasch abgearbeitet sind und konkurrierende Schreib- und Lesezugriffe einfach zu bewältigen sind, stellt dies keine echte Einschränkung dar. Daher lassen sich einfach hoch skalierbare Messsysteme bilden, die auch mit höheren Datenraten zurechtkommen. 16 Datenkanäle mit jeweiligen Datenraten von 100 kHz sind durch das erfindungsgemäße Messsystem problemlos zu bewältigen. Zudem kann das System aufgrund des kontrollierbaren zeitlichen auch für Echtzeitanforderungen eingesetzt werden. Aufgrund der offenen Struktur lassen sich verschiedenste Datenkonsumenten einbinden.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine schematische Darstellung eines Ausführungsbeispiels eines erfindungsgemäßen Messsystems,
- Fig. 2: eine detailliertere schematische Darstellung eines Ausführungsbeispiels eines erfindungsgemäßen Messsystems mit mehreren Datenproduzenten, mehreren Datenkonsumenten und einer Verarbeitungseinheit und
- Fig. 3: ein Ausführungsbeispiel eines Zustandsautomaten, der Teil einer Steuereinheit eines erfindungsgemäßen Messsystems sein kann.

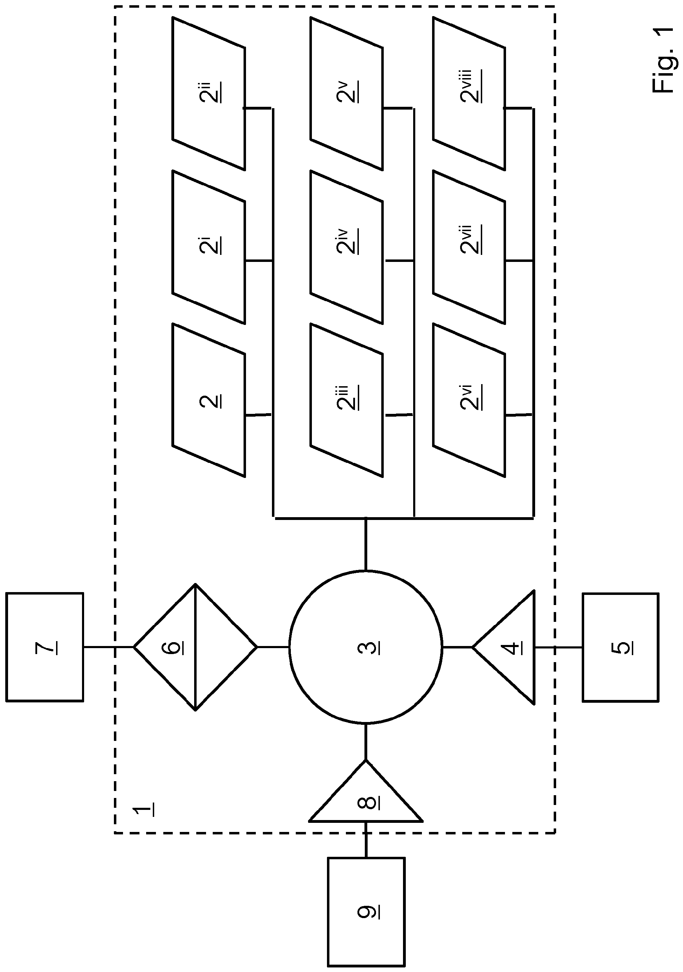

Fig. 1 zeigt eine schematische Darstellung eines erfindungsgemäßen Messsystems 1. Das Messsystem 1 ist modular aufgebaut und umfasst mehrere Module 2, die jeweils unterschiedliche Funktionalitäten bieten. Die Module 2 können in Form von Plugins implementiert sein. Ein Modul 2 kann beispielsweise ein Modbus-Teilnehmer, ein Advanced Modbus-Teilnehmer, eine Systemdiagnoseeinheit, eine Schreibeinheit für ein Streaming-Format, ein CAN-Bus-Teilnehmer, ein MQTT-Schreiber, eine Alarmeinheit oder eine Speichereinheit zum Ablegen und Bereithalten historischer Daten umfassen. Jedes dieser Module 2 kann einen Datenproduzenten, einen Datenkonsumenten oder eine Verarbeitungseinheit bilden. Alle Module 2 sind über eine Einheit 3 verbunden und können - soweit die Einheit 3 dies zulässt - Daten untereinander austauschen. Gleichzeitig steuert die Einheit 3 wichtige Funktionen des Messsystems 1.

Das Messsystem 1 weist zudem Schnittstellen auf, über die eine Kommunikation mit externen Einheiten und Endgeräten möglich ist. In Fig. 1 sind beispielhaft drei Schnittstellen eingezeichnet. Eine Schnittstelle 4 erlaubt einen Zugriff für ein entferntes Endgerät 5, beispielsweise über ein Weitbereichsnetzwerk, und kann beispielsweise SCPI (Standard Commands for Programmable Instruments) oder JSON (JavaScript Object Notation) Calls unterstützen. Auf diese Weise kann das entfernte Endgerät 5 beispielsweise eine Konfiguration des Messsystems 1 an die Einheit 3 senden. Eine Schnittstelle 6 kann eine bidirektionale Verbindung zu einer Verwaltungseinheit 7 bereitstellen, über die die Verwaltungseinheit 7 Einfluss auf das Messsystem 1 nehmen kann und über die systemweite Funktionen für das System bereitgestellt werden können. Eine Schnittstelle 8 kann ergänzenden Zugriff für ein lokal mit dem Messsystem 1 verbundenes Endgerät 9 bieten.

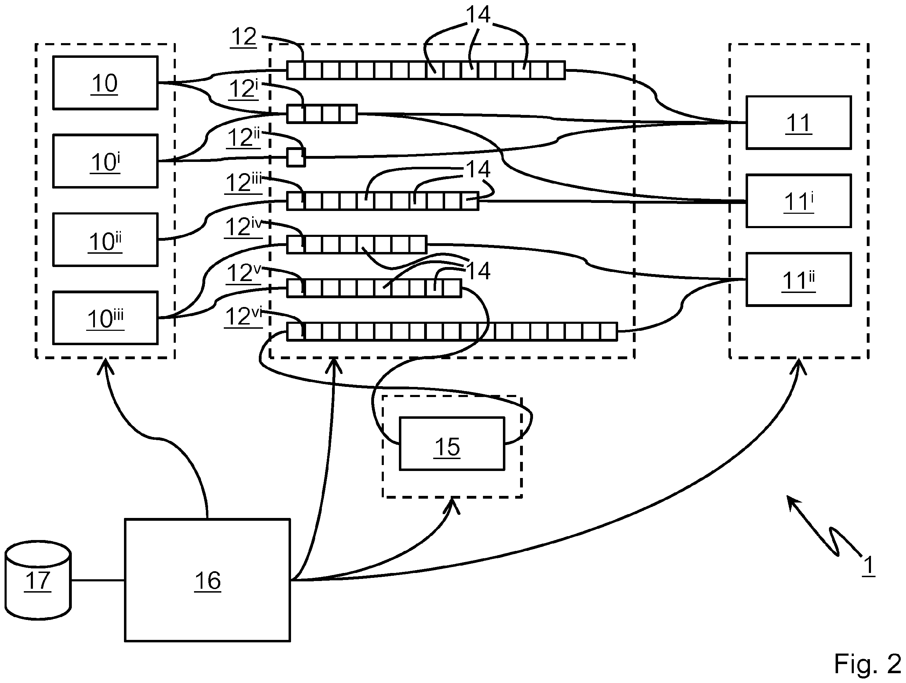

Anhand von Fig. 2 werden nachfolgend die Funktionalitäten des Ausführungsbeispiels des Messsystems näher beleuchtet. Das Messsystem 1 gemäß Fig. 2 umfasst vier Datenproduzenten 10 und drei Datenkonsumenten 11. Diese Datenproduzenten 10 und Datenkonsumenten 11 haben Zugriff auf mindestens einen von mehreren Speicherkanälen 12, wobei die mehreren Speicherkanäle in einem Speicherbereich 13 ausgebildet sind. Der Datenproduzent 10 kann in die Speicherkanäle 12 und 12i schreiben. Der Datenproduzent 10ⁱ kann in die Speicherkanäle 12ⁱ und 12ⁱⁱ schreiben. Der Datenproduzent 10ⁱⁱ kann in den Speicherkanal 12iii schreiben und der Datenproduzent 10ⁱⁱⁱ hat Zugriff auf die Speicherkanäle 12^{iv} und 12^{v}. Der Datenkonsument 11 kann produzierte Daten aus den Speicherkanälen 12, 12ⁱ und 12ⁱⁱ lesen. Der Datenkonsument 11ⁱ hat Zugriff auf die Speicherkanäle 12ⁱ und 12ⁱⁱⁱ. Der Datenkonsument 11ⁱⁱⁱ kann produzierte Daten aus den Speicherkanälen 12^{iv} und 12^{vi} lesen.

In jedem der in Fig. 2 dargestellten Speicherkanäle ist ein Raster eingezeichnet, das Speicherelemente 14 der Speicherkanäle 12 verdeutlichen soll. Dabei kann jedes der Speicherelemente 14 ein produziertes Datum speichern, wobei ein produziertes Datum skalar, ein- oder mehrdimensional sein kann. Zur Vereinfachung der Darstellung sind die Zugriffe auf die Speicherkanäle 12 jeweils an den endseitigen Speicherelementen 14 eingezeichnet, d.h. schreibender Zugriff an dem linken Ende des Speicherkanals 12 und ein lesender Zugriff an dem rechten Ende des Speicherkanals 12. Dies ist lediglich als schematische Darstellung zu verstehen. Üblicherweise werden die Datenproduzenten 10 und Datenkonsumenten 11 auf beliebige Speicherelemente 14 zugreifen können, wobei hierzu Schreibezeiger und Lesezeiger verwendet werden können.

Zusätzlich umfasst das Messsystem 1 eine Verarbeitungseinheit 15, die produzierte Daten aus dem Speicherkanal 12^{v} ausliest, diese ausgelesenen produzierten Daten verarbeitet und die dadurch gewonnenen gearbeiteten Daten in Speicherkanal 12^{vi} zurückschreibt.

Das Messsystem umfasst ferner eine Steuereinheit 16, die die Datenproduzenten 10, die Datenkonsumenten 11, die Speicherkanäle 12 und die Verarbeitungseinheit 15 steuert und überwacht. Dies betrifft vorzugsweise auch das Initialisieren dieser Einheiten und das Verwalten von Zugriffsrechten der Datenproduzenten 10, Datenkonsumenten 11 bzw. Verwaltungseinheit 15 auf die jeweiligen Speicherkanäle 12. Das Einwirken der Steuereinheit 16 auf die Datenproduzenten 10, die Datenkonsumenten 11, die Speicherkanäle 12 und die Verarbeitungseinheit 15 ist in Fig. 2 symbolisch durch einen Pfeil dargestellt.

Die Steuereinheit 16 ist mit einem Datenspeicher 17 verbunden, der vorzugsweise durch einen nicht-flüchtigen Speicher gebildet ist. In diesem Datenspeicher 17 kann eine Konfiguration abgelegt sein, die das Verhalten der Datenproduzenten 10, Datenkonsumenten 11, Speicherkanäle 12 und Verarbeitungseinheiten 15 definiert. Beim Starten des Messsystems 1 liest die Steuereinheit 16 die Konfiguration aus dem Datenspeicher 17 und initialisiert und startet die für das Messsystem 1 erforderlichen Einheiten. Mit Blick auf Fig. 1 wird die Einheit 3 durch die Kombination aus Speicherkanäle 12, Steuereinheit 16 und Datenspeicher 17 realisiert.

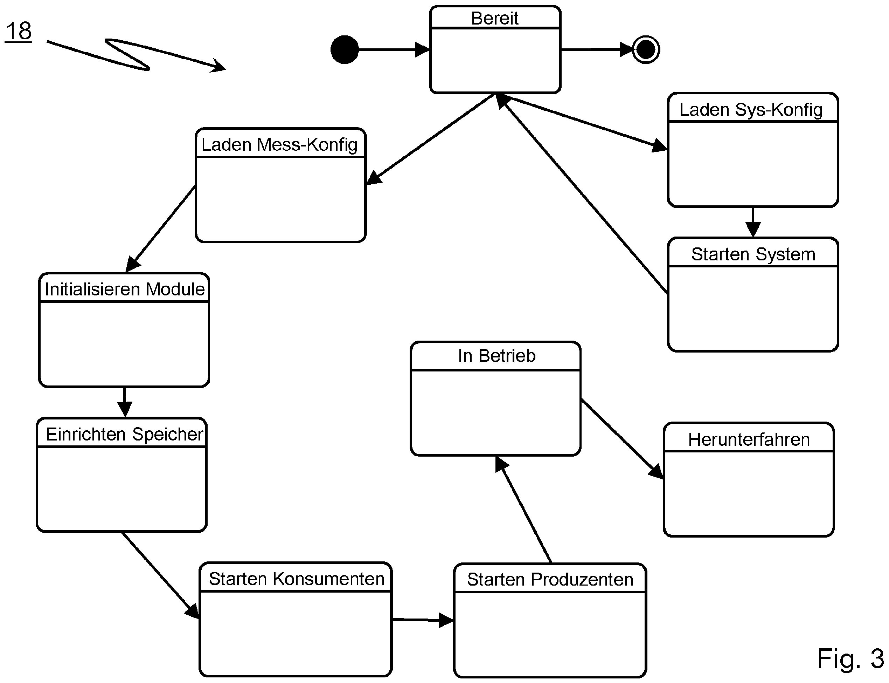

Die Steuereinheit 16 kann einen Zustandsautomaten umfassen. Ein Ausführungsbeispiel eines derartigen Zustandsautomaten ist in Fig. 3 dargestellt. Der beispielhaft dargestellte Zustandsautomat 18 umfasst zehn Zustände, nämlich den Zustand "Bereit", "Laden Sys-Konfig", "Starten System", "Laden Mess-Konfig", "Initialisieren Module", "Einrichten Speicher", "Starten Konsumenten", "Starten Produzenten", "In Betrieb" und "Herunterfahren". Eventuelle Fehlerzustände sind der Übersichtlichkeit wegen in Fig. 3 nicht dargestellt.

Beim Starten des Messsystems wird zunächst der Zustand "Bereit" angenommen, in dem grundlegende Funktionen des Messsystems und der zugrundeliegenden Hardware gestartet werden. In diesem Zustand kann auch ein Betriebssystem gestartet werden, das auf der zugrundeliegenden Hardware läuft. In einem nächsten Schritt wird im Zustand "Lade Sys-Konfig" die Basiskonfiguration des Messsystems geladen und in den nächsten Zustand "Starte System" beim Starten von Systemmodulen genutzt. Danach wird in dem Zustand "Lade Mess-Konfig" die Konfiguration der Messmodule geladen, wobei Messmodule Datenproduzenten, Datenkonsumenten und Verarbeitungseinheiten umfassen können. In den Zustand "Initialisiere Module" werden die Messmodule initialisiert. Dies beinhaltet insbesondere das Extrahieren der wechselseitigen Abhängigkeiten der Datenproduzenten, Datenkonsumenten und Verarbeitungseinheiten sowie das Bestimmen der jeweils erforderlichen Speicherkanäle. In dem Zustand "Einrichten Speicher" werden die Speicherkanäle in dem Speicherbereich eingerichtet, die für die Datenproduzenten und Datenkonsumenten benötigt werden. In dem Zustand "Starten Konsumenten" werden die Datenkonsumenten und in dem Zustand "Starten Produzenten" die Datenproduzenten gestartet. Danach befindet sich das System in dem Zustand "In Betrieb" und kann seine Aufgaben als Messsystem erfüllen. Dies beinhaltet das Erzeugen von produzierten Daten, insbesondere Messdaten, und das Konsumieren der produzierten Daten durch Datenkonsumenten. Der Zustand "Herunterfahren" dient dem koordinierten Herunterfahren des Messsystems.

Hinsichtlich weiterer vorteilhafter Ausgestaltungen des erfindungsgemäßen Messsystems wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Messsystem
- 2: Modul
- 3: Einheit
- 4: Schnittstelle
- 5: entferntes Endgerät
- 6: Schnittstelle
- 7: Verwaltungseinheit
- 8: Schnittstelle
- 9: lokales Endgerät
- 10: Datenproduzenten
- 11: Datenkonsumenten
- 12: Speicherkanal
- 13: Speicherbereich
- 14: Speicherelemente
- 15: Verarbeitungseinheit
- 16: Steuereinheit
- 17: Datenspeicher
- 18: Zustandsautomat

## Patentansprüche

1. Messsystem umfassend:
- einen Speicherbereich (13), in dem mehrere Speicherkanäle (12) ausgebildet sind, wobei die Speicherkanäle (12) mehrere Elemente zur Speicherung unterschiedlicher Versionen eines Datums aufweisen,
- mehrere Datenproduzenten (10), die jeweils zum Erzeugen von produzierten Daten ausgebildet sind, wobei jeder der mehreren Datenproduzenten (10) dazu ausgebildet ist, produzierte Daten in mindestens einen der mehreren Speicherkanäle (12) abzulegen, und wobei mindestens einer der mehreren Datenproduzenten (10) durch einen Sensor gebildet ist oder einen Sensor umfasst,
- mehrere Datenkonsumenten (11), die zum Auslesen von produzierten Daten aus mindestens einem der mehreren Speicherkanäle (12) ausgebildet sind, und
- eine Steuereinheit (16), die zum Steuern und/oder Überwachen des Speicherbereichs (13), der mehreren Datenproduzenten (10) und/oder der mehreren Datenkonsumenten (11) ausgebildet ist,
wobei eine Kommunikation zwischen den Datenproduzenten (10) und den Datenkonsumenten (11) über eine gemeinsame Schnittstelle erfolgt, wobei Schnittstelle durch die Speicherkanäle (12) gebildet ist,
wobei Schreibvorgänge durch die mehreren Datenproduzenten (10) in die mehreren Speicherkanäle (12) und Lesezugriffe durch die mehreren Datenkonsumenten (11) auf die mehreren Speicherkanäle (12) nicht miteinander synchronisiert sind, und wobei gleichzeitige Schreibzugriffe unterschiedlicher Datenproduzenten (10) und ein gleichzeitiger Schreibzugriff eines Datenproduzenten (10) und Lesezugriff eines Datenkonsumenten (11) auf dasselbe Element eines Speicherkanals (12) verhindert werden.

2. Messsystem nach Anspruch 1, **dadurch gekennzeichnet, dass** die Steuereinheit (16) einen Zustandsautomaten (18) umfasst, der zum Initialisieren der mehreren Datenproduzenten (10) und/oder der mehreren Datenkonsumenten (12) und/oder der mehreren Speicherkanäle (12) basierend auf einer Konfiguration ausgebildet ist

3. Messsystem nach Anspruch 1 oder 2, **dadurch gekennzeichnet, dass** die Steuereinheit (16) bei einem Initialisieren des Messsystems (1) dazu ausgebildet ist, basierend auf einer Konfiguration Zugriffe auf die mehreren Speicherkanäle (12) derart einzurichten und zu steuern, dass die mehreren Datenproduzenten (10) und die mehreren Datenkonsumenten (11) lediglich auf in der Konfiguration festgelegte Speicherkanäle (12) zugreifen können.

4. Messsystem nach Anspruch 3, **dadurch gekennzeichnet, dass**, durch die Steuereinheit (16) eingerichtete Zugriffe auf Speicherkanäle (12) zur Laufzeit des Messsystems (1) unveränderbar sind.

5. Messsystem nach einem der Ansprüche 1 bis 4, **gekennzeichnet durch** ein Speichersystem, wobei der Speicherbereich (13) mit den mehreren Speicherkanälen (12) Bestandteil des Speichersystems ist, wobei das Speichersystem eine Speichersteuereinheit umfasst und die Speichersteuereinheit zum Initialisieren und Verwalten der mehreren Speicherkanäle (12) und zum Steuern der Zugriffe auf die mehreren Speicherkanäle (12) ausgebildet ist.

6. Messsystem nach einem der Ansprüche 1 bis 5, **dadurch gekennzeichnet, dass** für jeden der mehreren Speicherkanäle (12) einen Schreibzeiger und mindestens einen Lesezeiger vorhanden ist, wobei der Schreibzeiger auf ein Element des jeweiligen Speicherkanals zeigt, das zuletzt geschrieben worden ist oder das als nächstes geschrieben werden kann.

7. Messsystem nach einem der Ansprüche 1 bis 6, **dadurch gekennzeichnet, dass** die Steuereinheit (16) die Zugriffe auf die mehreren Speicherkanäle (12) derart steuert, dass jeder der mehreren Speicherkanäle (12) produzierte Daten gleichen Ursprungs speichert.

8. Messsystem nach einem der Ansprüche 1 bis 7, **dadurch gekennzeichnet, dass** die mehreren Speicherkanäle (12) jeweils zum Speichern einer vordefinierten Anzahl von Elementen (14) ausgebildet sind, wobei die Elemente (14) innerhalb eines Speicherkanals (12) jeweils skalar, eindimensional oder mehrdimensional sind, und/oder
dass einer oder mehrere der mehreren Speicherkanäle (12) durch einen Ringspeicher mit einer jeweils vordefinierten Anzahl von Speicherelementen (14) gebildet ist/sind.

9. Messsystem nach Anspruch 8, **dadurch gekennzeichnet, dass**, die jeweilige Anzahl der Speicherelemente (14) auf Anforderungen eines auf den Ringspeicher zugreifenden Datenproduzenten (10) angepasst ist.

10. Messsystem nach einem der Ansprüche 1 bis 9, **dadurch gekennzeichnet, dass** mindestens einer der mehreren Datenproduzenten (10) dazu ausgebildet ist, produzierte Daten zusammen mit einem Zeitstempel abzuspeichern, wobei der Zeitstempel einen Zeitpunkt der Erzeugung der produzierten Daten angibt, und/oder
dass mindestens einer der mehreren Datenproduzenten (10) dazu ausgebildet ist, produzierte Daten mit einem vordefinierten zeitlichen Abstand in einen der mehreren Speicherkanäle (12) abzulegen.

11. Messsystem nach einem der Ansprüche 1 bis 10, **gekennzeichnet durch** mindestens eine Verarbeitungseinheit (15), wobei eine Verarbeitungseinheit (15) dazu ausgebildet ist, produzierte Daten aus mindestens einem der Speicherkanäle (12) auszulesen, ausgelesene Daten einem Verarbeitungsprozess zu unterziehen und derart gewonnene verarbeitete Daten in mindestens einen der mehren Speicherkanäle (12) abzulegen.

12. Messsystem nach einem der Ansprüche 1 bis 11, **dadurch gekennzeichnet, dass** die mehreren Datenproduzenten (10) einen Sensor, einen Geber, einen Geopositionstracker, eine CAN-Bus-Sendeeinheit - Controller-Area-Network-Bus-Sendeeinheit, eine Kameraeinheit, eine MVB-Sendeeinheit - Multi-Vehicle-Bus-Sendeeinheit, ein Diagnosesystem und/oder eine Modbus-Einheit umfassen.

13. Messsystem nach einem der Ansprüche 1 bis 12, **dadurch gekennzeichnet, dass** die mehreren Datenkonsumenten (11) einen Aktuator, eine Mensch-Maschine-Schnittstelle, eine Maschine-Maschine-Schnittstelle, eine Modbus-Sendeeinheit, eine CAN-Bus-Sendeeinheit - Controller-Area-Network-Bus-Sendeeinheit, ein MQTT-Schreiben - Message Queuing Telemetry Transport Schreiber, ein Alarm-Management-System und/oder einen Datenlogger umfassen.

14. Messsystem nach einem der Ansprüche 1 bis 13, **gekennzeichnet durch** mindestens eine Schnittstelle (4, 6, 8), die einen steuernden Zugriff auf das Messsystem (1) aus der Ferne ermöglicht.

15. Messsystem nach Anspruch 14, **dadurch gekennzeichnet, dass**, die Schnittstelle (4, 6, 8) eine Kommunikation zwischen einem entfernten Endgerät (5, 9) und der Steuereinheit (16) ermöglicht.

16. Messsystem nach einem der Ansprüche 1 bis 15, **dadurch gekennzeichnet** das die mehreren Datenproduzenten (10) und/oder die mehreren Datenkonsumenten (11) als Module ausgebildet sind, die je nach Anforderungen und/oder je nach Konfiguration in das Messsystem (1) einbindbar sind.

17. Verfahren zum Betreiben eines Messsystems nach einem der Ansprüche 1 bis 16, umfassend die Schritte:
Produzieren von produzierten Daten durch einen von mehreren Datenproduzenten (10),
Ablegen der produzierten Daten in mindestens einem Speicherkanal (12),
Auslesen von produzierten Daten aus einem Speicherkanal (12) durch einen von mehreren Datenkonsumenten (11),
wobei eine Kommunikation zwischen den Datenproduzenten (10) und den Datenkonsumenten (11) über eine gemeinsame Schnittstelle erfolgt, wobei die Schnittstelle durch die Speicherkanäle (12) ausgebildet ist,
wobei Schreibvorgänge durch die mehreren Datenproduzenten (10) in die mehreren Speicherkanäle (12) und Lesezugriffe durch die mehreren Datenkonsumenten (11) auf die mehreren Speicherkanäle (12) nicht miteinander synchronisiert sind, und wobei gleichzeitige Schreibzugriffe unterschiedlicher Datenproduzenten (10) und ein gleichzeitiger Schreibzugriff eines Datenproduzenten (10) und Lesezugriff eines Datenkonsumenten (11) auf dasselbe Element eines Speicherkanals (12) verhindert werden.
